# EUROPEAN PATENT APPLICATION

(11) **EP 2 015 266 A2**
(43) Date of publication of application: **14.01.2009**
(21) Application number: 08009369.3
(22) Date of filing: 21.05.2008
(51) Int. Cl.: G07F 17/32

(54) **Gaming machine shortening the playing time and playing method thereof**

(30) Priority: 07.06.2007 US 924978 P; 31.10.2007 US 933062
(71) Applicant: Aruze Gaming America, Inc., Las Vegas NV 89119 (US)
(72) Inventor: Okada, Kazuo, Tokyo 135-0063 (JP)
(74) Representative: HOFFMANN EITLE

(57) **Abstract**

In a bonus game, a predetermined time at which the symbols 180 being variably displayed are rearranged is switched between a base time and a special time shorter than the base time, based on an operation received by a start button 11a.

## Description

### CROSS REFERENCE TO RELATED APPLICATION

This application claims the benefit of U.S. Provisional Application No. 60/924,978, filed on June 7, 2007 and U.S. Non-Provisional Application No. 11/933,062, filed on October 31, 2007.

### BACKGROUND OF THE INVENTION

### 1. Field of the Invention

The invention relates to a gaming machine in which a playing time is shortened by an operation from an outside, and a playing method thereof.

### 2. Description of Related Art

In a conventional gaming machine, when a player inserts a game medium such as coin or bill into an insertion slot of the gaming machine and presses a start button, symbols are scroll-displayed in a display mounted on a front of a cabinet and the symbols are then stopped automatically.

In gaming machines of U.S.A. or Australia, for example, as disclosed in a U.S. Patent No. 6,383,073B1, a player cannot stop a scroll display of symbol columns, based on the player's intention. Meanwhile, U.S. Patent No. 6,471,208B2 discloses a gaming machine having a roulette function added thereto, wherein a button is provided to stop the roulette by the player's intention.

In the mean time, in gaming machines of Japan, for example, as disclosed in U.S. Patent No. 6,866,582B2 or 7,053,585B2, there are provided buttons for each of symbol columns, so as to stop a scroll display of each symbol column by a player's intention.

Like this, each country prescribes a variety of rules for the gaming machines in legal regulations or voluntary regulations.

However, if a scroll display of each symbol column is not enabled to be stopped by a player's intention, a player, who feels that it takes a long time for the scroll display of each symbol column to stop, may lose an interest in a game. In particular, a player who desires to quickly end a game due to certain reasons or a player who wants to rapidly know a game result may have dissatisfaction.

In addition, it is preferred in a casino operating gaming machines that the rate of operation of a gaming machine is raised and the takings are thus increased. However, since it is fixed a time that is spent until the scroll display of each symbol column is automatically stopped, the rate of operation of the gaming machine is limited, so that the increase in the takings cannot be expected.

The invention is to provide a gaming machine having an entertainment characteristic, which is not provided to the prior art, and a playing method thereof.

In addition, the invention is to provide a gaming machine capable of satisfying a player's desire for a playing time and increasing a rate of operation of the gaming machine and a playing method thereof.

### SUMMARY OF THE INVENTION

The invention provides a gaming machine having structures as described below. The gaming machine comprises a display, an input device and a controller. The display arranges many symbols. The input device receives an operation from an outside. The controller is programmed to operate as described in steps of (a)~(d). The controller is programmed (a) to start a variable display of the symbols, based on a predetermined condition, (b) to rearrange the symbols in a timing at which a predetermined time has elapsed after the variable display is started, (c) to determine a winning on the basis of a relation of the symbols rearranged and (d) to switch the predetermined time between a base time and a special time shorter than the base time, based on the operation received by the input device.

According to the above structure, based on the operation received by the input device, a predetermined time is switched between a base time and a special time shorter than the base time. Accordingly, when the predetermined time is switched into the special time, the symbols are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In addition, when the predetermined time is switched into the special time, more unit games are performed within the same time. Accordingly, the rate of operation of the gaming machine is increased. As a result, a new entertainment characteristic can be provided.

The invention provides a gaming machine having structures as described below. The gaming machine comprises a display, an input device, a speaker and a controller. The display arranges many symbols. The input device receives an operation from an outside. The speaker outputs a voice sound. The controller is programmed to operate as described in steps of (a) ~ (e). The controller is programmed (a) to start a variable display of the symbols based on a predetermined condition, (b) to rearrange the symbols in a timing at which a predetermined time has elapsed after the variable display is started, (c) to determine a winning on the basis of a relation of the symbols rearranged, (d) to switch the predetermined time between a base time and a special time shorter than the base time, based on the operation received by the input device and (e) to output a notifying sound corresponding to an operation received by the input device, from the speaker.

According to the above structure, based on the operation received by the input device, a predetermined time is switched between a base time and a special time shorter than the base time. Accordingly, when the predetermined time is switched into the special time, the symbols are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In, addition, when the predetermined time is switched into the special time, more unit games are performed within the same time. Accordingly, the rate of operation of the gaming machine is increased. In addition, a notifying sound corresponding to an operation received by the input device is outputted from the speaker, so that the player is notified that the predetermined time is the base time or special time. As a result, a new entertainment characteristic can be provided.

The invention provides a gaming machine having structures as described below. The gaming machine comprises a display, an input device and a controller. The display arranges many symbols. The input device receives an operation from an outside. The controller is programmed to operate as described in steps of (a)~(e). The controller is programmed (a) to start a variable display of the symbols based on a predetermined condition, (b) to rearrange the symbols in a timing at which a predetermined time has elapsed after the variable display is started, (c) to determine a winning on the basis of a relation of the symbols rearranged, (d) to shift to a specific game state when a relation of the symbols rearranged is a specific relation and (e) to switch the predetermined time between a base time and a special time shorter than the base time, based on the operation received by the input device, in the specific game state.

According to the above structure, based on the operation received by the input device in the specific game state, a predetermined time is switched between a base time and a special time shorter than the base time. Accordingly, when the predetermined time is switched into the special time, the symbols are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In addition, when the predetermined time is switched into the special time in the specific game state, more unit games are performed within the same time. Accordingly, the rate of operation of the gaming machine is increased. As a result, a new entertainment characteristic can be provided.

The invention provides a gaming machine having structures as described below. The gaming machine comprises a display, an input device, a speaker and a controller. The display arranges many symbols. The input device receives an operation from an outside. The speaker outputs a voice sound. The controller is programmed to operate as described in steps of (a) ~ (f). The controller is programmed (a) to start a variable display of the symbols based on a predetermined condition, (b) to rearrange the symbols in a timing at which a predetermined time has elapsed after the variable display is started, (c) to determine a winning on the basis of a relation of the symbols rearranged, (d) to shift to a specific game state when a relation of the symbols rearranged is a specific relation, (e) to switch the predetermined time between a base time and a special time shorter than the base time, based on the operation received by the input device, in the specific game state and (f) to output a notifying sound corresponding to an operation received by the input device, from the speaker.

According to the above structure, based on the operation received by the input device in the specific game state, a predetermined time is switched between a base time and a special time shorter than the base time. Accordingly, when the predetermined time is switched into the special time, the symbols are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In addition, when the predetermined time is switched into the special time in the specific game state, more unit games are performed within the same time. Accordingly, the rate of operation of the gaming machine is increased. In addition, a notifying sound corresponding to an operation received by the input device is outputted from the speaker, so that the player is notified that the predetermined time is the base time or special time. As a result, a new entertainment characteristic can be provided.

The invention provides a playing method of a gaming machine repeatedly executing a unit game in which many symbols are rearranged in a display. The method comprises steps of: (a) starting a variable display of the symbols based on a predetermined condition, (b) rearranging the symbols in a timing at which a predetermined time has elapsed after the variable display is started, (c) determining a winning on the basis of a relation of the symbols rearranged and (d) switching the predetermined time between a base time and a special time shorter than the base time, based on the operation received by the input device.

According to the above structure, based on the operation received by the input device, a predetermined time is switched between a base time and a special time shorter than the base time. Accordingly, when the predetermined time is switched into the special time, the symbols are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In addition, when the predetermined time is switched into the special time, more unit games are performed within the same time. Accordingly, the rate of operation of the gaming machine is increased. As a result, a new entertainment characteristic can be provided.

The invention provides a playing method of a gaming machine repeatedly executing a unit game in which many symbols are rearranged in a display. The method comprises steps of: (a) starting a variable display of the symbols based on a predetermined condition, (b) rearranging the symbols in a timing at which a predetermined time has elapsed after the variable display is started, (c) determining a winning on the basis of a relation of the symbols rearranged, (d) switching the predetermined time between a base time and a special time shorter than the base time, based on the operation received by the input device and (e) outputting a notifying sound corresponding to an operation received by the input device, from the speaker.

According to the above structure, based on the operation received by the input device, a predetermined time is switched between a base time and a special time shorter than the base time. Accordingly, when the predetermined time is switched into the special time, the symbols are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In addition, when the predetermined time is switched into the special time, more unit games are performed within the same time. Accordingly, the rate of operation of the gaming machine is increased. In addition, a notifying sound corresponding to an operation received by the input device is outputted from the speaker, so that the player is notified that the predetermined time is the base time or special time. As a result, a new entertainment characteristic can be provided.

The invention provides a playing method of a gaming machine repeatedly executing a unit game in which many symbols are rearranged in a display. The method comprises steps of: (a) starting a variable display of the symbols based on a predetermined condition, (b) rearranging the symbols in a timing at which a predetermined time has elapsed after the variable display is started, (c) determining a winning on the basis of a relation of the symbols rearranged, (d) shifting to a specific game state when a relation of the symbols rearranged is a specific relation and (e) switching the predetermined time between a base time and a special time shorter than the base time, based on the operation received by the input device, in the specific game state.

According to the above structure, based on the operation received by the input device in the specific game state, a predetermined time is switched between a base time and a special time shorter than the base time. Accordingly, when the predetermined time is switched into the special time in the specific game state, the symbols are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In addition, when the predetermined time is switched into the special time in the specific game state, more unit games are performed within the same time. Accordingly, the rate of operation of the gaming machine is increased. As a result, a new entertainment characteristic can be provided.

The invention provides a playing method of a gaming machine repeatedly executing a unit game in which many symbols are rearranged in a display. The method comprises steps of: (a) starting a variable display of the symbols based on a predetermined condition, (b) rearranging the symbols in a timing at which a predetermined time has elapsed after the variable display is started, (c) determining a winning on the basis of a relation of the symbols rearranged, (d) shifting to a specific game state when a relation of the symbols rearranged is a specific relation, (e) switching the predetermined time between a base time and a special time shorter than the base time, based on the operation received by the input device, in the specific game state and (f) outputting a notifying sound corresponding to an operation received by the input device, from the speaker.

According to the above structure, based on the operation received by the input device in the specific game state, a predetermined time is switched between a base time and a special time shorter than the base time. Accordingly, when the predetermined time is switched into the special time in the specific game state, the symbols are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In addition, when the predetermined time is switched into the special time in the specific game state, more unit games are performed within the same time. Accordingly, the rate of operation of the gaming machine is increased. In addition, a notifying sound corresponding to an operation received by the input device is outputted from the speaker, so that the player is notified that the predetermined time is the base time or special time. As a result, a new entertainment characteristic can be provided.

### BRIEF DESCRIPTION OF THE DRAWINGS

FIG. 1 illustrates a playing method of a gaming machine;
FIG. 2 is a block diagram of a gaming machine;
FIG. 3 illustrates a display screen;
FIG. 4 shows symbols and code numbers thereof;
FIG. 5 is a perspective view showing an external appearance of a gaming machine;
FIG. 6 is a block diagram showing an entire electrical structure of a gaming machine;
FIG. 7 is a block diagram showing an electrical structure of a sub-control substrate of a gaming machine;
FIG. 8 is a flow chart of a game executing process;
FIG. 9 is a flow chart of a bonus game process; and
FIG. 10 is a flow chart of a scroll display process.

### DESCRIPTION OF THE PREFERRED EMBODIMENTS

Hereinafter, it will be described an embodiment of a gaming machine and a playing method according to the invention.

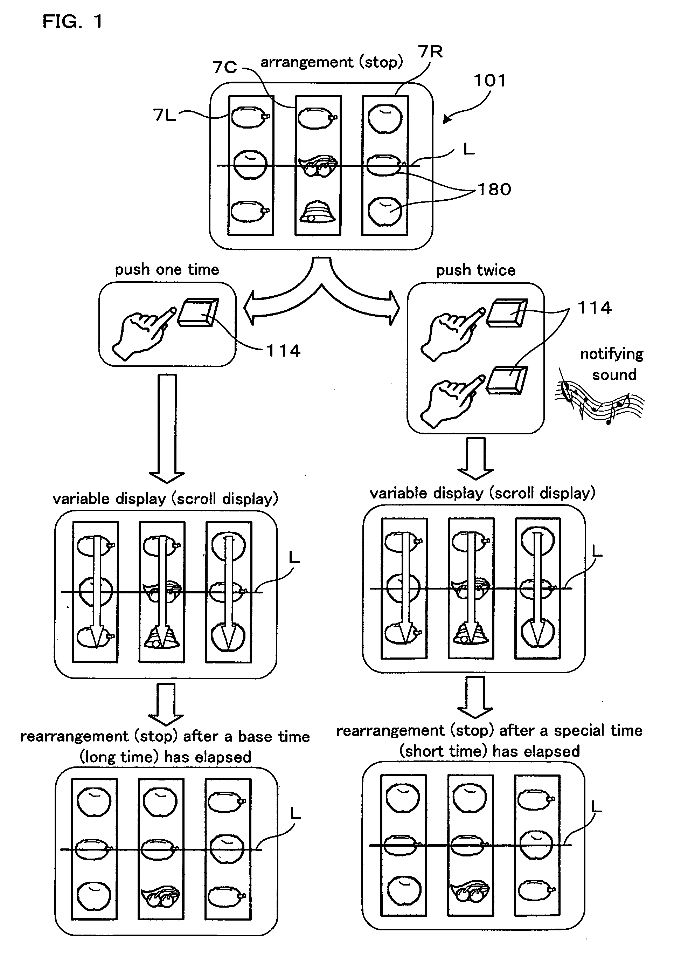

As shown in Fig. 1, a gaming machine repeatedly executes a unit game in which many symbols 180 are rearranged in a display 101 and carries out a playing method comprising steps of starting a variable display of the symbols based on a predetermined condition; rearranging the symbols 180 in a timing at which a predetermined time has elapsed after the variable display is started; determining a winning on the basis of a relation of the symbols 180 rearranged; shifting to a specific game state when a relation of the symbols 180 rearranged is a specific relation; switching the predetermined time between a base time and a special time shorter than the base time, based on the operation received by an input device 114, in the specific game state; and outputting a notifying sound corresponding to an operation received by the input device 114, from a speaker 102.

Herein, the "arrangement" means a state in which the symbols 180 are allowed to be visible with naked eyes of an exterior player. In other words, in Fig. 1, the symbols 180 are under state of being displayed in the display windows 7L, 7C, 7R. In the mean time, the "rearrangement" means arranging the symbols 180 again after dismissing the arrangement of the symbols 180. In addition, the "specific game state" means a bonus game. The "specific relation" means a bonus trigger. When a bonus trigger is made in a basic game, a game state is shifted to a bonus game from the basic game.

### (display 101)

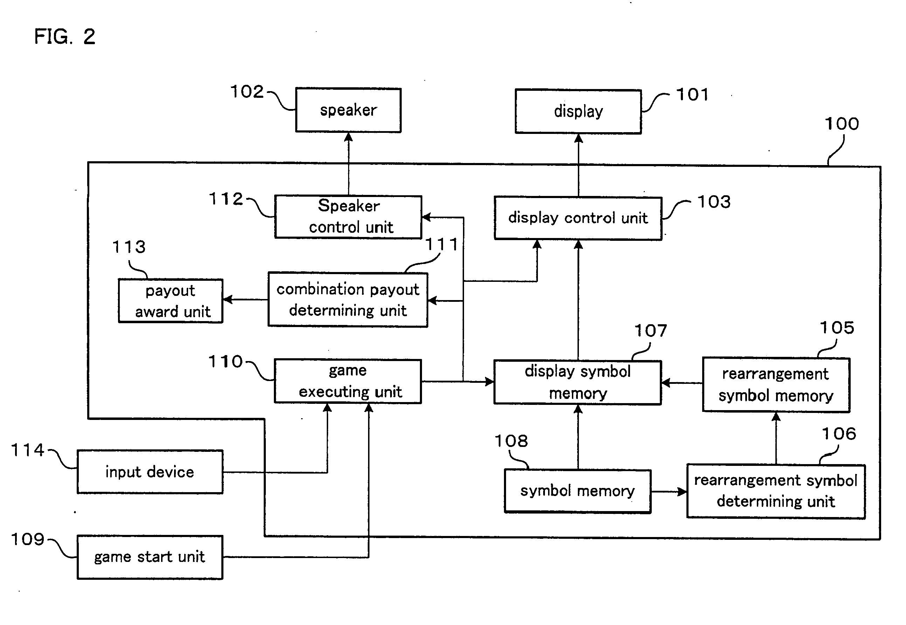

As shown in Fig. 2, the gaming machine executing the playing method comprises a display 101, a speaker 102, a controller 100 and an in input device 114. The display 101 has a payline L and is configured to arrange the symbols 180.

The display unit 101 may be a mechanical structure with a reel device for arranging the symbols 180 by rotation of a reel or electrical structure with a video reel on which an image is displayed for arranging the symbols 180. Further, the display unit 101 may be a structure of combining a mechanical structure (reel) and an electrical structure (video reel). The electrical structure may include a liquid crystal device, a CRT (cathode-ray tube), a plasma display and the like. In addition, the number of the display windows 7L, 7C, 7R may be arbitrary. A detailed structure of the display unit 101 will be described later.

### (speaker 102)

The speaker 102 outputs a notifying sound corresponding to an operation received by the input device 114 in a bonus game.

### (controller 100)

The controller 100 is structured to execute a first process of starting a variable display of the symbols 180 based on a predetermined condition, a second process of rearranging the symbols 180 in a timing at which a predetermined time has elapsed after the variable display is started, a third process of determining a winning on the basis of a relation of the symbols 180 rearranged, a fourth process of shifting to a specific game state when a relation of the symbols 180 rearranged is a specific relation, a fifth process of switching a predetermined time between a base time and a special time shorter than the base time, based on the operation received by an input device 114, in a specific game state, and a sixth process of outputting a notifying sound corresponding to an operation received by the input device 114, from a speaker 102. In other words, the controller 100 comprises first to sixth processing units.

The controller 100 comprises a symbol memory 108 for storing all symbols 180 and a display symbol memory 107 for storing the symbols 180 in the symbol memory 108 as a display symbol. The display symbol memory 107 can be accessed by a display control unit 103. The display control unit 103 reads out the symbols 180 in the display symbol memory 107 under control of a game executing unit 110 and displays the symbols 180 in the display 101. A detailed display state will be described later.

In addition, the controller 100 comprises a rearrangement symbol determining unit 106 that determines symbols to be rearranged in every unit game, based on the symbols 180 stored in the symbol memory 108. The symbols to be rearranged, which are determined by the rearrangement symbol determining unit 106, are stored in a rearrangement symbol memory 105, are outputted to the display symbol memory 107 and are then used for an image process in the display control unit 103, so that they are displayed in the display 101.

Furthermore, the controller 100 is connected to a game start unit 109. The game start unit 109 has a function of outputting a game start signal by an operation of the player. The controller 100 comprises a game executing unit 110 for executing a unit game in which the symbols 180 are rearranged, a combination payout determining unit 111 for determining a payout in a unit game, and a payout award unit 113 for awarding the payout determined in the combination payout determining unit 111.

The game executing unit 110 starts a variable display of the symbols 180 arranged in the display 101 with a game start signal, as trigger, from the game start unit 109 and rearranges the symbols 180 in a timing at which a predetermined time has elapsed after the variable display is started. In other words, the controller 100 executes a first process of starting a variable display of the symbols 180 based on a predetermined condition and a second process of rearranging the symbols 180 in a timing at which a predetermined time has elapsed after the variable display is started. The combination payout determining unit 111 determines a payout that is determined by a combination of the symbols 180 rearranged on the payline L in a unit game. In other words, the controller 100 executes a third process of determining a winning on the basis of a relation of the symbols 180 rearranged.

In addition, when a combination of the symbols 180 rearranged on the payline L is a combination of a specific symbol ("APPLE"), the game executing unit 110 shifts a game state to a bonus game from a basic game, with this combination as a bonus trigger. In other words, the controller 100 executes a fourth process of shifting to a specific game state when a relation of the symbols 180 rearranged is a specific relation.

Moreover, the controller 100 is connected to the input device 114. As the input device 114 is operated by a player in a bonus game, a predetermined time, which is a timing at which the symbols 180 being variably displayed are rearranged, is switched between a base time and a special time shorter than the base time. Specifically, as shown in Fig. 1, when the input device 114 is pushed one time by a player, the predetermined time is set as a base time. When the input device 114 is pushed twice by a player, the predetermined time is set as a special time. Herein, the "one time push" means a push operation in which a secondary operation is not carried out for the input device 114 before an arbitrary time (for example, 1 second) has elapsed after the primary operation is executed for the input device 114. In the mean time, the "twice push" means a push operation in which a secondary operation is carried out for the input device 114 before an arbitrary time (for example, 1 second) has elapsed after the primary operation is executed for the input device 114. In other words, the controller 100 executes a fifth process of switching a predetermined time between a base time and a special time shorter than the base time, based on the operation received by an input device 114, in a specific game state.

Moreover, the controller 100 has a speaker control unit 112. The speaker control unit 112 outputs a notifying sound corresponding to a base time and a notifying sound corresponding to a special time shorter than the base time, from the speaker 102, based on an operation received by the input device 114. Specifically, as shown in Fig. 1, when the input device 114 is pushed one time by a player, a "non-sound" corresponding to a base time is outputted from the speaker 102. In other words, when the input device 114 is pushed one time, no notifying sound is outputted from the speaker 102. In the mean time, when the input device 114 is pushed twice by a player, a "notifying sound" corresponding to a special time is outputted from the speaker 102. Meanwhile, a "notifying sound" corresponding to the base time may be outputted from the speaker 102. In other words, the controller 100 executes a sixth process of outputting a notifying sound corresponding to an operation received by the input device 114, from the speaker 102.

In the mean time, each block of the controller 100 may be structured with a hardware or software, as required.

### (operation of the controller 100)

In the followings, an operation of the controller 100 will be described. First, the symbols to be rearranged are determined by the rearrangement symbol determining unit 106 and the determined symbols to be rearranged are stored in the rearrangement symbol memory 105. The symbols to be rearranged, which the rearrangement symbol memory 105 stores, are stored in the display symbol memory 107. The symbols to be rearranged, which are stored in the display symbol memory 107, are enabled to be displayed in the display 101 by the display control unit 103. When a unit game is executed by the game executing unit 110, a variable display of the symbols is started and the symbols to be rearranged, which are stored in the display symbol memory 107, are displayed in the display 101 in a timing at which a predetermined time has elapsed from the start of the variable display, so that the symbols 180 are rearranged. Thereby, the controller 100 executes a first process of starting a variable display of the symbols 180 based on a predetermined condition and a second process of rearranging the symbols 180 in a timing at which a predetermined time has elapsed after the variable display is started.

Then, a winning is determined by a relation of the symbols 180 rearranged and a payout based on the winning is awarded by the combination payout determining unit 111 and the payout award unit 113. Thereby, the controller 100 executes a third process of determining a winning on the basis of a relation of the symbols 180 rearranged.

Moreover, when a relation of the symbols 180 rearranged is a specific relation (bonus trigger), a game state is shifted to a bonus game from a basic game. Thereby, the controller 100 executes a fourth process of shifting to a specific game state when a relation of the symbols 180 rearranged is a specific relation.

Furthermore, as an operation of the player is received by the input device 114 in the bonus game, the predetermined time, which is a timing at which the symbols 180 being variably displayed are rearranged, is switched between the base time and the special time shorter than the base time. Specifically, as shown in Fig. 1, when the input device 114 is pushed one time by the player, the predetermined time is set as a base time. When the input device 114 is pushed twice by the player, the predetermined time is set as a special time. Thereby, the controller 100 executes a fifth process of switching a predetermined time between a base time and a special time shorter than the base time, based on the operation received by the input device 114, in a specific game state.

Furthermore, based on the operation received by the input device 114, a notifying sound corresponding to a base time and a notifying sound corresponding to a special time shorter than the base time are outputted from the speaker 102 by the speaker control unit 112. Specifically, as shown in Fig. 1, when the input device 114 is pushed one time by a player, no notifying sound is outputted from the speaker 102. In the mean time, when the input device 114 is pushed twice by a player, a "notifying sound" corresponding to a special time is outputted from the speaker 102. Thereby, the controller 100 executes a sixth process of outputting a notifying sound corresponding to an operation received by the input device 114, from the speaker 102.

As can be clearly seen from the above operation, the gaming machine 1 executes a playing method comprising steps of starting a variable display of the symbols 180 based on a predetermined condition; rearranging the symbols 180 in a timing at which a predetermined time has elapsed after the variable display is started; determining a winning on the basis of a relation of the symbols 180 rearranged; shifting to a specific game state when a relation of the symbols 180 rearranged is a specific relation; switching the predetermined time between a base time and a special time shorter than the base time, based on the operation received by the input device 114, in the specific game state; and outputting a notifying sound corresponding to the operation received by the input device 114, from the speaker 102.

According to the playing method, based on the operation received by the input device 114 in a specific game state (bonus game), a predetermined time is switched between a base time and a special time shorter than the base time. Accordingly, when the predetermined time is switched into the special time in a specific game state, the symbols 180 are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In addition, when the predetermined time is switched into the special time, more unit games are performed within the same time. Accordingly, the rate of operation of the gaming machine is increased. In addition, a notifying sound corresponding to an operation received by the input device 114 is outputted from the speaker 102, so that the player is notified that the predetermined time is the base time or special time. As a result, a new entertainment characteristic can be provided.

### (display state)

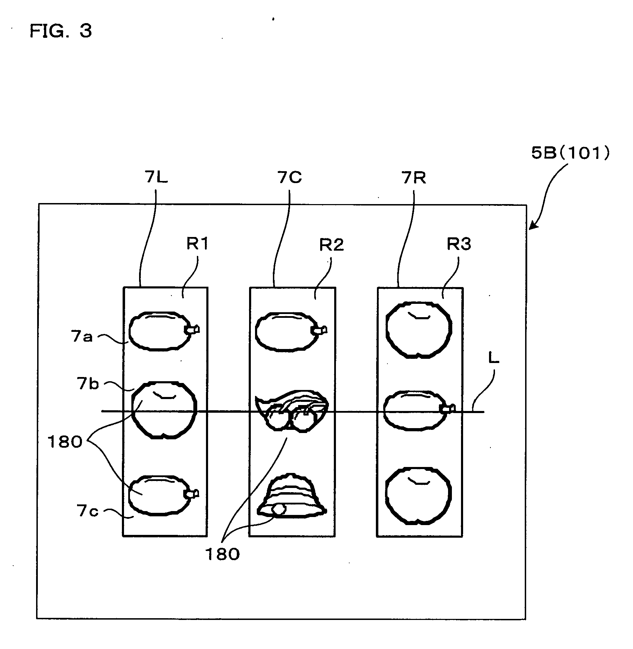

It is specifically described an example of a display state of the display unit 101, with respect to the operation processes of the gaming machine 1 and the playing method. In the mean time, as shown in Fig. 3, the display state is described with reference to a structure in which the display unit 101 arranges the symbols in a mechanical reel manner.

The display unit 101 has display windows 7L, 7C, 7R for arranging the symbols 180. The display windows 7L, 7C, 7R are disposed in a central part of the display unit 101. In the display windows 7L, 7C, 7R, the reels, on which symbol columns consisting of the symbols 180 are depicted, are rotation-displayed (refer to Fig. 1). In addition, each of the display windows 7L, 7C, 7R is divided into upper, central and lower stages 7a, 7b, 7c. Each of the symbols is stopped (arranged) in the respective stages 7a, 7b, 7c. For example, in Fig. 3, "PLUM" is stopped in the upper stage 7a of the display window 7L, "ORANGE" is stopped in the central stage 7b of the display window 7L and "PLUM" is stopped in the lower stage 7c of the display window 7L. As a result, the display windows 7L, 7C, 7R display a symbol matrix consisting of 3 columns and 3 rows. In the mean time, the symbol matrix is not limited to 3 columns/3 rows.

In addition, the payline L is provided which horizontally traverses the respective display windows 7L, 7C, 7R. The payline L is provided to determine a combination of the symbols 180. In other words, when the symbols 180 are rearranged on and out of the payline L, a combination is determined only for the symbols 180 rearranged on the pay line. As a result of the determination for a combination, when it is made a winning combination, it is carried out, for example, a process of paying out a coin in accordance with the winning combination.

In the mean time, in this embodiment, when the symbols stopped on the payline L provided are a predetermined combination, a process of paying out a coin is carried out. However, a following structure may be adopted: when a predetermined number of symbols referred to as a scatter symbol is displayed in the display 101, irrespective of the payline L, a process of paying out a coin is carried out.

### (symbol, combination and the like)

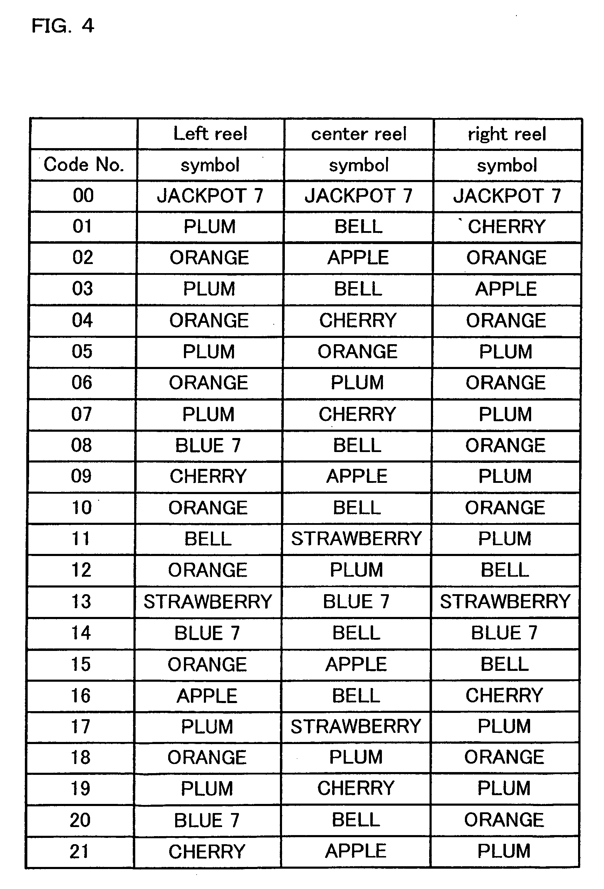

As shown in Fig. 4, 22 symbols constituting the symbol columns are depicted on each of the left reel R1, the center reel R2 and the right reel R3. The symbols constituting the respective symbol columns are given with one code number of 0~21. Each of the symbol columns is constituted with a combination of symbols of "JACKPOT 7," "BLUE 7," "BELL," "CHERRY," "STRAWBERRY," "PLUM," "ORANGE" and "APPLE."

The three successive symbols in the symbol columns are displayed (arranged) in the upper, central and lower stages 7a, 7b, 7c of the display windows 7L, 7C, 7R, respectively, so that they constitute a symbol matrix of 3 colums/3 rows in the display windows 7L, 7C, 7R. When a BET button is pushed and then a start button is pushed to start a game, the symbol columns depicted on the respective reels R1, R2, R3 are scroll-displayed in the display windows 7L, 7C, 7R in the downward direction as the reels R1, R2, R3 are rotated. After a predetermined time period has elapsed, they are stopped (rearranged) in the display 7 as the rotation of the reels R is stopped.

In addition, various winning combinations are predetermined with regard to the respective symbols. The winning combination is a combination that a combination of symbols stopped on the payline L becomes an advantageous state to the player. The advantageous state is a state in which a coin is paid out in accordance with the winning combination, a state in which the payout-number of coins is added to a credit, a state in which a bonus game is started, and the like.

Specifically, when a combination of "APPLE" symbol is stopped on the payline L, a bonus trigger is made and a gaming state is shifted to a bonus game from a basic game. In addition, when a symbol of "CHERRY" is stopped on the payline L, 20 coins (game medium) are paid out per one bet. When a symbol of "PLUM" is stopped on the payline L, 5 coins are paid out per one bet.

In the mean time, the bonus game is a gaming state that is more advantageous than a basic game. In one embodiment, the bonus game is a free game. The free game is a gaming state allowing a player to play a game for a predetermined number of times, without betting a coin. The bonus game is not particularly limited as long as it is a gaming state advantageous to the player, i.e., it is more advantageous than the basic game. For example, the bonus game may include a state in which it is possible to obtain more game media than the basic game, a state in which it is possible to obtain a game medium in a higher probability than in the basic game, a state in which a game medium is less consumed than in the basic game, and the like. Specifically, a free game, a second game and the like are examples of the bonus game.

### (mechanical structure of the gaming machine 1)

In the followings, it will be described an example of the gaming machine 1 structured in a mechanical and electrical manner.

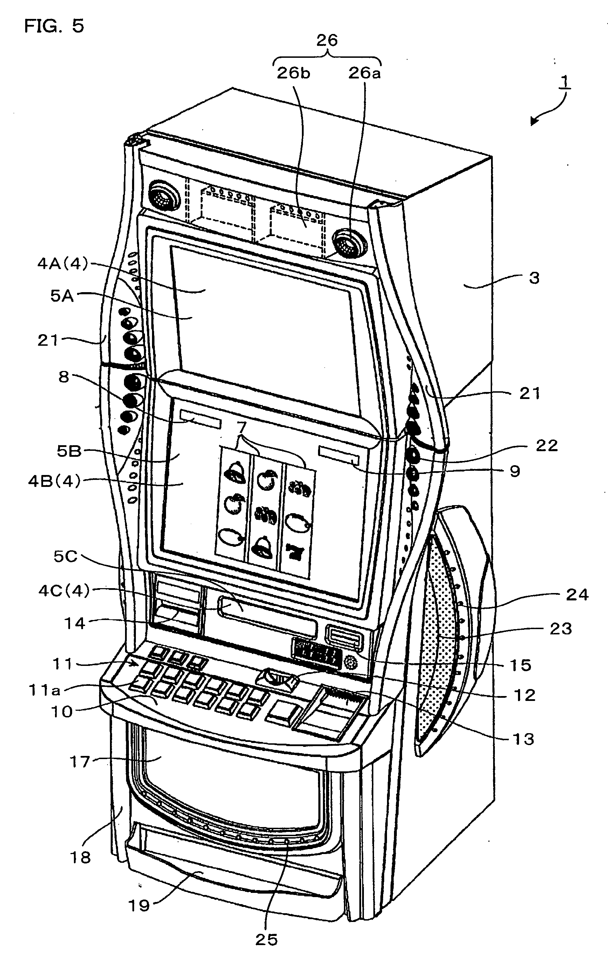

As shown in Fig. 5, the gaming machine 1 is an upright-type gaming machine provided in a game arcade such as casino and the like and has a cabinet 3 for receiving electrical or mechanical parts so as to execute a game aspect. As a display unit 4 for displaying the game information based on a game operation of a player, there are provided an upper variable display unit 4A, a central variable display unit 4B and a lower variable display unit 4C, for example. Each of the display units 4A, 4B, 4C is attached to a front of the cabinet 3 that is longitudinally long.

The upper variable display unit 4A is a display unit on which a player fixes the eyes during the unit game and has a transparent upper liquid crystal panel 5A that is fixed to a front door of the cabinet 3. A variety of effect images are displayed in the upper liquid crystal panel 5A during the unit game. For example, an effect of a moving picture is performed in the upper liquid crystal panel 5A when a winning is made, for example.

The central variable display unit 4A is a rotating symbol display panel on which a player always fixes the eyes and has a transparent central liquid crystal panel 5B that is fixed to the front door of the cabinet 3. To the central liquid crystal panel 5B are provided three transparent display windows 7L, 7C, 7R. The symbols of the three reels R1, R2, R3 provided in the cabinet 3 can be seen from an outside through the respective display windows 7L, 7C, 7R. In addition, a single payline L, which horizontally traverses the three display windows 7L, 7C, 7R, is displayed in the central liquid crystal panel 5B. Moreover, a payout-number display unit 8 and a credit-number display unit 9 are displayed in an upper part of the central liquid crystal panel 5B.

The lower variable display unit 4C has a lower liquid crystal panel 5C that displays a point-number recorded in a card or a point-number of a game. A numerical value displayed in the lower liquid crystal panel 5C is based on a display result of the central variable display unit 4B. When a winning combination is made in the central variable display unit 4B, a point-number of a game displayed in the lower liquid crystal panel 5C is added on the basis of the winning combination made. A ticket printer 14 is provided to a left side of the lower liquid crystal panel 5C and a card reader 15 is provided to a right side of the lower liquid crystal panel 5C.

An operating table 10 that protrudes forward from the front face of the cabinet 3 is disposed below the lower variable display unit 4C. On the operating table 10, there are arranged operating buttons 11 (for example, bet button, collect button, start button 11a and the like) as an operating unit enabling a player to operate a game. In addition, a coin insertion slot 12 and a bill insertion slot 13 are provided to the operating table 10.

Herein, in this embodiment, the start button 11a is the input device 114 (refer to Fig. 2) described above. When the start button 11a is pushed one time, the variable display (scroll display) of the symbols 180 are started in the three display windows 7L, 7C, 7R after a predetermined time has elapsed which is a timing at which the symbols 180 being variably displayed are rearranged. In addition, when the start button 11a is pushed twice, the variable display (scroll display) of the symbols 180 are started in the three display windows 7L, 7C, 7R after a predetermined time is set as a special time, which is a timing at which the symbols 180 being variably displayed are rearranged.

A waist-position panel 17 is disposed below the operating table 10. The waist-position panel 17 is a plastic panel having a game-related image printed thereto. The waist-position panel 17 is fixed to a lower front door 18 and illuminated by a cold cathode-ray tube. In addition, a coin tray 19 that collects coins, which are paid out on the basis of a game result, is disposed below the waist-position panel 17.

Furthermore, a light-emitting unit 20 is disposed to the cabinet 3 of the gaming machine 1 so that it surrounds a game area including the upper variable display unit 4A, the central variable display unit 4B, the lower variable display unit 4C and the operating table 10. The light-emitting unit 20 comprises side lamps 22 that are provided to inclined parts 21, which are protruded in a bow shape at front right and left ends of the cabinet 3 and at side parts over the upper variable display unit 4A, the central variable display unit 4B and the lower variable display unit 4C, speaker lamps 24 that are provided to arc-shaped speaker 23, which are sideways protruded at the right and left ends of the cabinet 3 adjacent to the operating table 10, and are arranged along edges of the speakers 23, under lamps 25 that are provided to a lower front door 18 and arranged along lower edges of the waist-position panel 17, and top lamps 26 that are provided to an upper part of the upper variable display unit 4A and have power lamps 26a disposed at both sides and central band-shaped lamps 26b arranged in a horizontal direction.

### (electrical structure of the gaming machine 1)

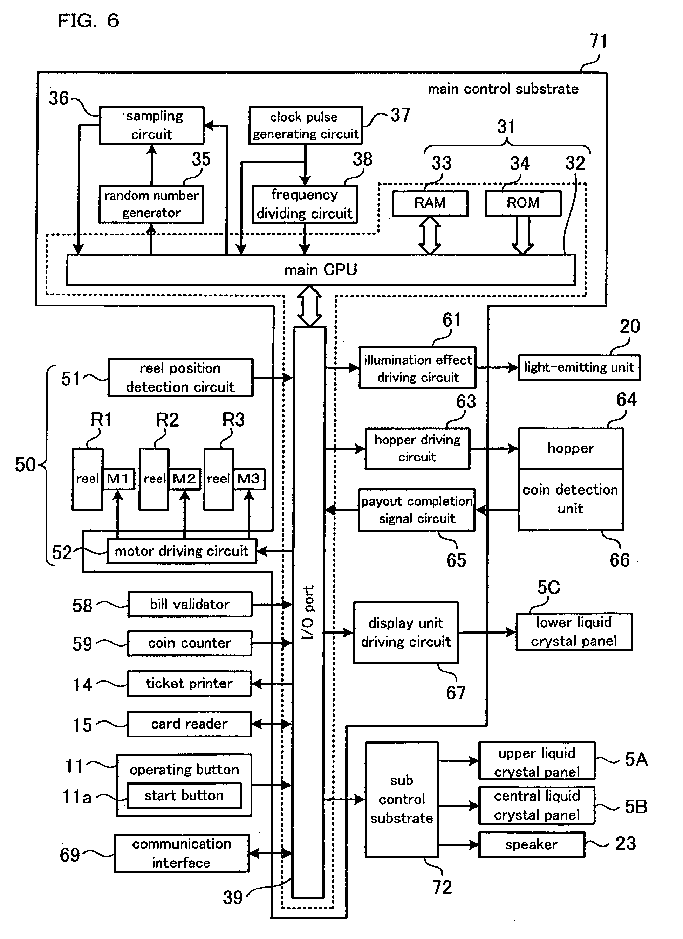

Fig. 6 is a block diagram showing an entire electrical structure of the gaming machine 1. As shown in Fig. 6, the gaming machine 1 has many components about a main control substrate 71 including a microcomputer 31. The main control substrate 71 has a microcomputer 31, a random number generator 35, a sampling circuit 36, a clock pulse generating circuit 37, a frequency dividing circuit 38, an illumination effect driving circuit 61, a hopper driving circuit 63, a payout completion signal circuit 65 and a display unit driving circuit 67.

The microcomputer 31 has a main CPU 32, a RAM 33 and a ROM 34. The main CPU 32 operates in accordance with a program stored in the ROM 34 and executes an input/output of a signal to and from the other components through an I/O port 39, thereby controlling an overall operation of the gaming machine 1. The RAM 33 stores data or a stop symbol determining program used when the main CPU 32 operates. For example, a random number value that is sampled by the sampling circuit 36 is temporarily maintained in the RAM after a game starts. In addition, the code numbers of the reels R1, R2, R3 are stored in the RAM. The ROM 34 stores a program that is executed by the main CPU 32 and permanent data.

The random number generator 35 is operated in accordance with an instruction of the main CPU 32 and generates a random number within a predetermined range. The sampling circuit 36 samples any random number of the random numbers that are generated by the random number generator 35 in accordance with an instruction of the main CPU 32 and inputs the sampled random number into the main CPU 32. The clock pulse generating circuit 37 generates a reference clock for operating the main CPU 32 and the frequency dividing circuit 38 inputs a signal that the reference clock is divided in a predetermined period to the main CPU 32.

In addition, the main control substrate 71 is connected with a reel driving unit 50. The reel driving unit 50 has a reel position detecting circuit 51 that detects each position of the reels R1, R2, R3 and a motor driving circuit 52 that inputs a driving signal to motors M1, M2, M3 for rotating the respective reels R1, R2, R3. As the driving signal is inputted from the motor driving circuit 52, the motors M1, M2, M3 are operated to rotate the respective reels R1, R2, R3.

Moreover, the main control substrate 71 is connected with the operating buttons 11 including a start button 11a for inputting an instruction to rotate the reels R1, R2, R3, a collect button, a bet button and the like and allows signals corresponding to the push of the buttons to be inputted into the main CPU 32 via the I/O port 39.

In addition, the main control substrate 71 is connected with a bill validator 58, a coin counter 59, a ticket printer 14, a card reader 15 and a communication interface 69.

The bill validator 58 reads an image of bill inserted into the bill insertion slot 13 and receives the normal bill in the cabinet 3. In addition, when receiving the normal bill, the bill validator 58 outputs an input signal to the main CPU 32 based on an amount of the bill. The main CPU 32 stores a credit-number in the RAM 33, which corresponds to the amount of bill transmitted by the input signal.

The coin counter 59 is provided in the coin insertion slot 12 and identifies whether the coin inserted into the coin insertion slot 12 by the player is normal or not. The abnormal coin is discharged to the coin tray 19. In addition, the coin counter 59 outputs an input signal to the main CPU 32 when it detects a normal coin.

The ticket printer 14 prints a barcode on a ticket, in which data such as credit-number stored in the RAM 33, the day and time and identification number of the gaming machine 1 is coded, based on the control signal outputted from the main CPU 32, and then outputs a ticket having the barcode attached thereto.

The card reader 15 reads the data from a smart card to transmit it to the main CPU 32, or writes the data to the smart card based on a control signal from the main CPU 32.

The communication interface 69 is provided to communicate with a host computer equipped in the game arcade, through the communication line.

The illumination effect driving circuit 61 outputs an effect signal that causes the light-emitting unit 20 to execute an illumination effect. The light-emitting unit 20 consists of many lamps or LED including the side lamps 22, the speaker lamps 24, the under lamps 25 and the top lamps 26.

The hopper driving circuit 63 drives a hopper 64 under control of the main CPU 32. The hopper 64 executes an operation of paying out a coin and pays out the coin to the coin tray 19. The payout completion signal circuit 65 inputs data of the coin-number from a coin detection unit 66 connected thereto and inputs a signal, which notifies payout completion of the coin when the coin-number reaches a predetermined number, to the main CPU 32. The coin detection unit 66 measures the number of coins paid out by the hopper 64 and inputs data of the measured number to the payout completion signal circuit 65. The display unit driving circuit 67 controls display operations of various display units such as the lower liquid crystal panel 5C.

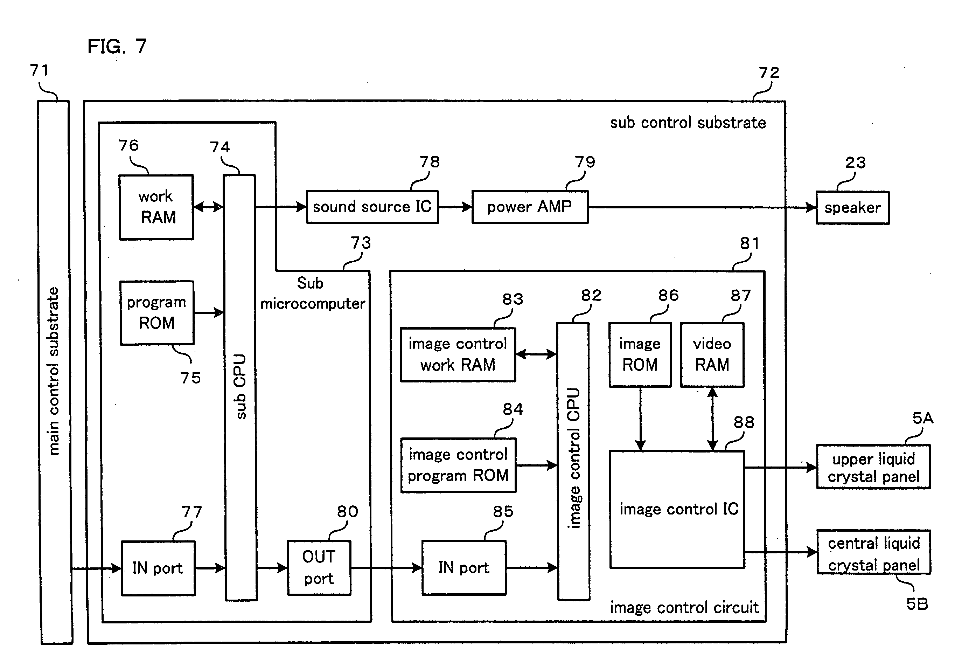

Further, the main control substrate 71 is connected with a sub control substrate 72. As shown in Fig. 7, the sub control substrate 72 performs a display control of the upper liquid crystal panel 5A of the variable display unit 4A, a display control of the central liquid crystal panel 5B of the variable display unit 4B and an output control of a voice sound by the speaker, based on commands inputted from the main control substrate 71. The sub control substrate 72 is comprised on a circuit substrate different from the circuit substrate constituting the main control substrate 71 and has a microcomputer 73 (hereinafter, referred to as "sub microcomputer") as a main component. In addition, the sub control substrate has a sound source IC 78 controlling a voice sound outputted from the speaker 23, a power AMP 79 serving as an amplifier and an image control circuit 81 serving as a display control means of the upper liquid crystal panel 5A and the central liquid crystal panel 5B.

The sub microcomputer 73 has a sub CPU 74 that performs a control operation in accordance with a control command transmitted from the main control substrate 71, a program ROM 75 serving as a memory means, a work RAM 76, an IN port 77 and an OUT port 80. Although the sub control substrate 72 does not have a clock pulse generating circuit, a frequency dividing circuit, a random number generator and a sampling circuit, it is structured to execute a random number sampling on the operating program of the sub CPU 74. The program ROM 75 stores a control program that is executed in the sub CPU 74. The work RAM 76 is structured to serve as a temporary memory means when the control program is executed in the sub CPU 74.

The image control circuit 81 has an image control CPU 82, an image control work RAM 83, an image control program ROM 84, an IN port 85, an image ROM 86, a video RAM 87 and an image control IC 88. The image control CPU 82 determines an image that is displayed in the upper liquid crystal panel 5A and the central liquid crystal panel 5B, in accordance with the image control program stored in the image control program ROM 84, based on a parameter that is set in the sub microcomputer 73.

The image control program ROM 84 stores an image control program that is related to a display in the upper liquid crystal panel 5A and the central liquid crystal panel 5B, or various selection tables. The image control work RAM 83 is configured to serve as a temporary memory means when the image control program is executed in the image control CPU 82. The image control IC 88 forms an image corresponding to the content determined in the image control CPU 82 and outputs it to the upper liquid crystal panel 5A and the central liquid crystal panel 5B.

The image ROM 86 stores dot data for forming an image. The video RAM 87 serves as a temporary memory means when an image is formed in the image control IC 88.

### (operation of the gaming machine 1: main control substrate 71)

In the followings, a process that is performed in the gaming machine 1 will be described. As the main CPU 32 reads out and executes a game program, a game is progressed.

### (game executing process)

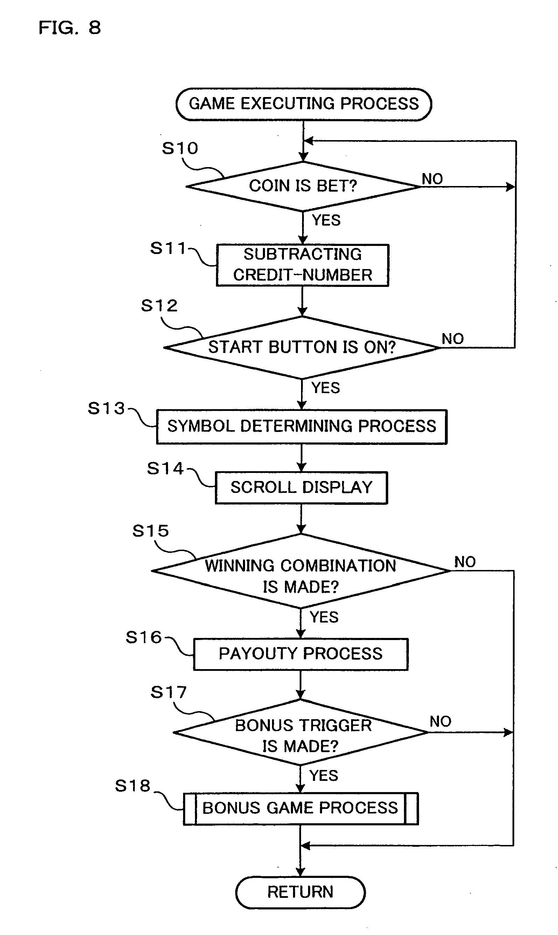

The main CPU 32 of the gaming machine 1 carries out a game executing process routine shown in Fig. 8. When the game executing process routine is carried out, the main CPU 32 determines whether a coin is bet or not (S10). In this process, it is determined whether an input signal due to a push of the bet button is received or not. When it is determined that a coin is not bet (S10, N0), the step of S10 is re-executed, so that a waiting state is made until a coin is bet.

In the mean time, when it is determined that a coin is bet (S10, YES), the credit-number stored in the RAM 33 is subtracted in accordance with the coin-number (S11). Meanwhile, when the number of coins bet is greater than the credit-number stored in the RAM 33, the step of S11 is re-executed without subtracting the credit-number. In addition, when the number of coins bet exceeds the upper limit (in this embodiment, 50 pieces) allowing a player to bet a coin in a single game, a step of S12 is executed without subtracting the credit-number.

Next, it is determined whether a start button is ON or not (S12). When it is determined that the start button is not ON (S12, NO), the process is returned to the step of S10. Meanwhile, when it is determined that the start button is not ON (for example, the start button is not ON and an instruction to end the game is inputted), it is canceled the subtraction result in the step of S11.

In the mean time, when the start button is ON (S12, YES), a symbol determining process is executed (S13). In other words, a stop symbol determining program stored in the RAM 33 is executed, so that it is determined a symbol matrix including the symbols 180 to be stopped on the payline L.

Then, the symbols 180 of the display windows 7L, 7C, 7R are scroll-displayed (S14). After a scroll display of the symbols 180 is started and then a predetermined time (base time) has elapsed, the symbol matrix determined in the step of S13 is stopped (rearranged) in the display windows 7L, 7C, 7R.

Then, it is determined whether a combination is made or not, i.e., whether a combination of the symbols 180 stopped on the payline L is a winning combination or not (S15). When it is determined that the combination is not a winning combination (S15, NO), this routine is ended. In the mean time, when it is determined that the combination is a winning combination (S15, YES), a payout process is executed (S16). In other, words, a payout-number of coins based on the winning combination made is calculated. When the coins to be paid out are stored, a predetermined number of credits is added to the credit-number stored in the RAM 33. In the mean time, when the coins are paid out, a control signal is transmitted to the hopper 64, so that a predetermined number of coins is paid out through the coin tray 19.

Then, it is determined whether a bonus trigger is made as a winning combination (S17). In other words, it is determined whether a combination of "APPLE" is arranged on the payline L. When it is determined that a bonus trigger is not made (S17, NO), this routine is ended. In the mean time, when it is determined that a bonus trigger is made (S17, YES), a bonus game process is executed (S18). The bonus game process will be described later. Then, this routine is ended.

### (bonus game process)

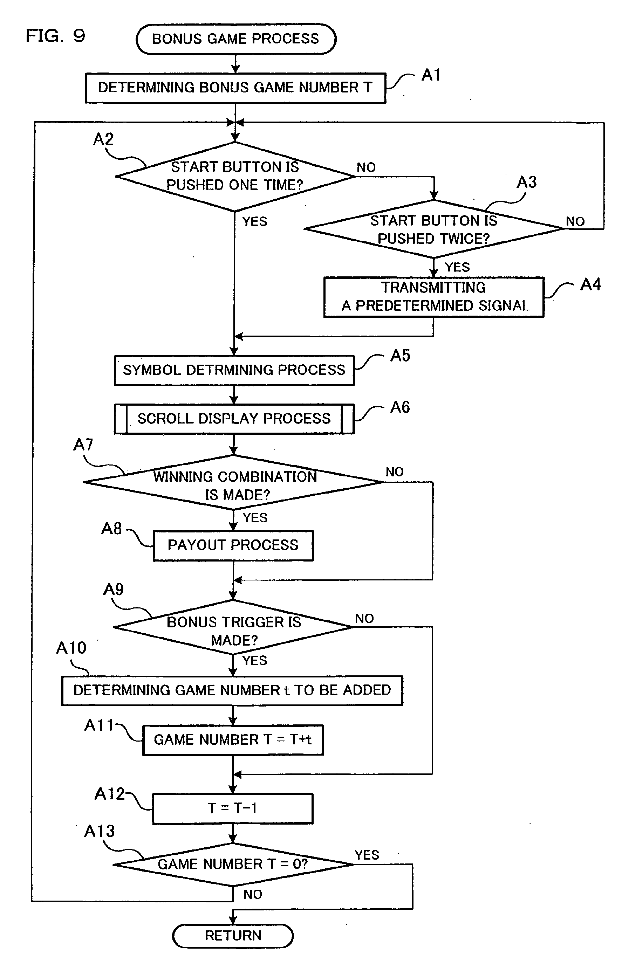

The main CPU 32 of the gaming machine 1 executes a bonus game process routine in a step of S18 shown in Fig. 9 when it is determined in the step of S17 of Fig. 8 that a bonus trigger is made. When the bonus game process routine is executed, the main CPU 32 determines a bonus game number T (A1). Then, it is determined whether the start button 11a is pushed one time or not (A2). When it is determined that the start button 11a is not pushed one time (A2, NO), it is determined whether the start button 11a is pushed twice or not (A3). When it is determined that the start button 11a is not pushed twice (A3, NO), the process is returned to the step of A2. In the mean time, when it is determined that the start button 11a is pushed twice (A3, YES), a predetermined signal is transmitted to the sub control substrate 72 (A4).

In the step of A2, when it is determined that the start button 11a is pushed one time (A2, YES), or after the step of A4, a symbol determining process is executed (A5). In other words, the stop symbol determining program stored in the RAM 33 is executed, so that a symbol matrix including the three symbols 180 to be stopped on the payline L is determined.

Then, a scroll display process is executed (A6). The scroll display process will be described later. Then, it is determined whether a combination is made or not, i.e., whether a combination of the symbols 180 stopped on the payline L is a winning combination or not (A7). When it is determined that the combination is a winning combination (A7, YES), a payout process is executed (A8). In other words, a payout-number of coins based on the winning combination made is calculated. When the coins to be paid out are stored, a predetermined number of coins is added to the credit-number stored in the RAM 33. In the mean time, when the coins are paid out, a control signal is transmitted to the hopper 64, so that a predetermined number of coins are paid out to the coin tray 19.

When it is determined in the step of A7 that the combination is not a winning combination (A7, NO), or after the step of A8, it is determined whether a bonus trigger is made as a winning combination (A9). In other words, it is determined whether a combination of "APPLE" is arranged on the payline L. When it is determined that a bonus trigger is made (A9, YES), a game number t to be added is determined (A10). Then, the game number t to be added is added to the bonus game number T (A11).

When it is determined in the step of A9 that a bonus trigger is not made (A9, NO), or after the step of A11, the bonus game number T is subtracted by "1" (A12). Then, it is determined whether the bonus game number is "0" or not (A13). When it is determined that the bonus game number is not "0" (A13, NO), the process is returned to the step of A2. In the mean time, when it is determined that the bonus game number is "0" (A13, YES), this sub routine is ended.

### (scroll display process)

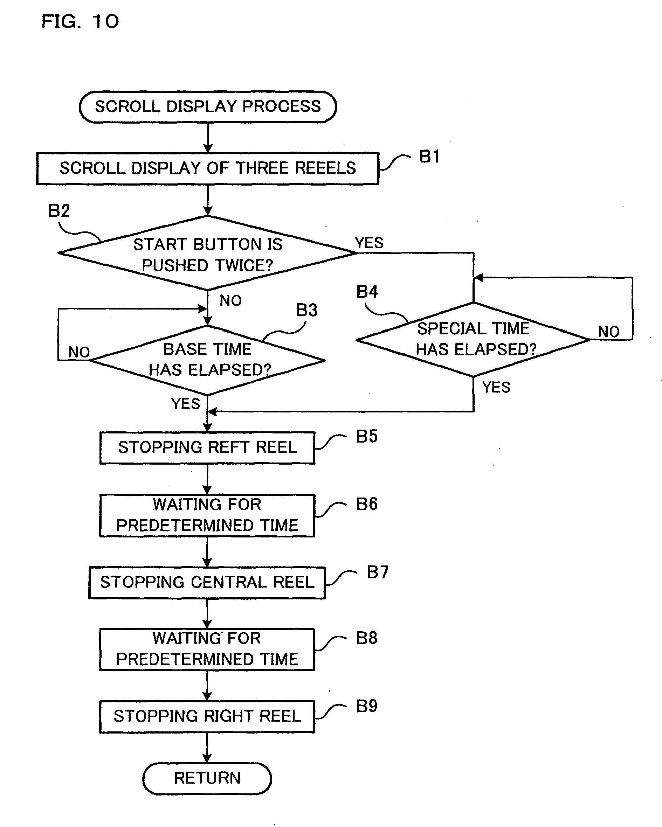

In the followings, it will be described a scroll display process that is executed in the step of A6 of Fig. 9, with reference to Fig. 10. When a scroll display process is executed, the main CPU 32 scroll-displays the symbols 180 of the three reels R1, R2, R3, which are visible from the display windows 7L, 7C, 7R (B1). Then, it is determined whether the start button 11a is pushed "twice" (B2). When it is determined that the start button 11a is not pushed "twice" (B2, NO), it is determined whether a base time has elapsed or not (B3). When it is determined that the base time has not elapsed (B3, NO), the step of B3 is repeated, so that it is regarded that a waiting state of the base time is made.

When it is determined in the step of B2 that the start button 11a is pushed "twice" (B2, YES), it is determined whether a special time has elapsed or not (B4). When it is determined that the special time has not elapsed (B4, NO), the step of B4 is repeated, so that it is regarded that a waiting state of the special time is made.

When it is determined in the step of B3 that the base time has elapsed (B3, YES), or when it is determined in the step of B4 that the special time has elapsed (B4, YES), the symbols 180 of the left reel R1 are stopped (rearranged) in the left display window 7L (B5). Then, a waiting state of predetermined time (for example, 1 second or less) is made (B6), and then the symbols 180 of the center reel R2 are stopped (rearranged) in the center display window 7L (B7). Then, a waiting state of predetermined time (for example, 1 second or less) is made (B8), and then the symbols 180 of the right reel R3 are stopped (rearranged) in the right display window 7R (B9), so that this sub routine is ended. Thereby, the symbols 180 are sequentially stopped (rearranged) in the three display windows 7L, 7C, 7R and the symbol matrix, which is determined in the step of A5, is stopped (rearranged) in the display windows 7L, 7C, 7R.

Like this, in the bonus game, the predetermined time is switched between the base time and the special time shorter than the base time, based on the operation received by the start button 11a. Accordingly, when the predetermined time is switched into the special time in the bonus game, the symbols 180 are rearranged in the timing at which the special time shorter than the base time has elapsed, so that the time required for a unit game is shortened. Thereby, since the waiting time of the player is shortened, a player who desires to quickly end the game or a player who wants to rapidly know a game result is satisfied. In addition, when the predetermined time is switched into the special time in the bonus game, more unit games are performed within the same time. Accordingly, the rate of operation of the gaming machine 1 is increased.

### (process operation of the gaming machine 1: sub control substrate 72)

When the various processes are performed by the game executing process routine in the main control substrate 71, a result or content corresponding to the process is inputted as a command or data to the sub control substrate 72. The sub control substrate 72 performs the display of the payout-number display unit 8 of the central liquid crystal panel 5B or credit-number display unit 9 and the like and displays an effect image in the upper liquid crystal panel 5A. In addition, the sub control substrate 72 performs an effect relating to an output of the sound from the speaker 23, in combination with, or independently of the effect in the upper liquid crystal panel 5A.

### (notifying sound output process)

In addition, the sub CPU 74 of the sub control substrate 72 outputs a notifying sound, which represents that the start button 11a is pushed twice, from the speaker 23, when it receives a signal outputted from the main control substrate 71 in the step of A4 of Fig. 9.

Like this, as the notifying sound corresponding to the operation received by the start button 11a is outputted from the speaker 23, the player is notified that the predetermined time is a base time or special time.

Although the above descriptions have been provided with regard to the characteristic parts so as to understand the invention more easily, the invention is not limited to the embodiment as described above and can be applied to the other embodiments and the applicable scope should be construed as broadly as possible. Furthermore, the terms and phraseology used in the specification have been used to correctly illustrate the invention, not to limit it. In addition, it will be understood by those skilled in the art that the other structures, systems, methods and the like included in the spirit of the invention can be easily derived from the spirit of the invention described in the specification. Accordingly, it should be considered that the invention covers equivalent structures thereof without departing from the spirit and scope of the invention as defined in the following claims. Further, the abstract is provided so that an intellectual property office and a general public institution or one skilled in the art who is not familiar with patent and legal or professional terminology can quickly analyze the technical features and essences of the invention through a simple investigation. Accordingly, the abstract is not intended to limit the scope of the invention that should be evaluated by the claims. In addition, it is required to sufficiently refer to the documents that have been already disclosed, so as to fully understand the objects and effects of the invention.

The above descriptions include a process that is executed on a computer or computer network. The above descriptions and expressions have been provided so that the one skilled in the art can understand the invention most effectively. In the specification, the respective steps used to induce one result or blocks having a predetermined processing function should be understood as a process having no self-contradiction. In addition, the electrical or magnetic signal is transmitted/received and written in the respective steps or blocks. Although the processes in the respective steps or blocks embody the signal as a bit, value, symbol character, term, number and the like, it should be noted that these have been used for the convenience of descriptions. Further, although the processes in the respective steps or blocks have been often described as an expression common to a human action, the process described in the specification is executed by a variety of devices in principle. In addition, the other structures necessary for the respective steps or blocks are apparent from the above descriptions.

## Claims

1. A gaming machine comprising:
a display that arranges a plurality of symbols;
an input device that receives an operation from an outside and
a controller programmed:
(a) to start a variable display of the symbols, based on a predetermined condition,
(b) to rearrange the symbols in a timing at which a predetermined time has elapsed after the variable display is started,
(c) to determine a winning on the basis of a relation of the symbols rearranged and
(d) to switch the predetermined time between a base time and a special time shorter than the base time, based on the operation received by the input device.

2. A gaming machine comprising:
a display that arranges a plurality of symbols;
an input device that receives an operation from an outside;
a speaker that outputs a voice sound; and
a controller programmed:
(a) to start a variable display of the symbols based on a predetermined condition,
(b) to rearrange the symbols in a timing at which a predetermined time has elapsed after the variable display is started,
(c) to determine a winning on the basis of a relation of the symbols rearranged,
(d) to switch the predetermined time between a base time and a special time shorter than the base time, based on the operation received by the input device and
(e) to output a notifying sound corresponding to an operation received by the input device, from the speaker.

3. A gaming machine comprising:
a display that arranges a plurality of symbols;
an input device that receives an operation from an outside; and
a controller programmed:
(a) to start a variable display of the symbols based on a predetermined condition,
(b) to rearrange the symbols in a timing at which a predetermined time has elapsed after the variable display is started,
(c) to determine a winning on the basis of a relation of the symbols rearranged,
(d) to shift to a specific game state when a relation of the symbols rearranged is a specific relation and
(e) to switch the predetermined time between a base time and a special time shorter than the base time, based on the operation received by the input device, in the specific game state.

4. A gaming machine comprising:
a display that arranges a plurality of symbols;
an input device that receives an operation from an outside;
a speaker that outputs a voice sound and
a controller programmed:
(a) to start a variable display of the symbols based on a predetermined condition,
(b) to rearrange the symbols in a timing at which a predetermined time has elapsed after the variable display is started,
(c) to determine a winning on the basis of a relation of the symbols rearranged,
(d) to shift to a specific game state when a relation of the symbols rearranged is a specific relation,
(e) to switch the predetermined time between a base time and a special time shorter than the base time, based on the operation received by the input device, in the specific game state and
(f) to output a notifying sound corresponding to an operation received by the input device, from the speaker.

5. A playing method of a gaming machine repeatedly executing a unit game in which a plurality of symbols are rearranged in a display, the method comprising steps of:
(a) starting a variable display of the symbols based on a predetermined condition,
(b) rearranging the symbols in a timing at which a predetermined time has elapsed after the variable display is started,
(c) determining a winning on the basis of a relation of the symbols rearranged and
(d) switching the predetermined time between a base time and a special time shorter than the base time, based on the operation received by the input device.

6. A playing method of a gaming machine repeatedly executing a unit game in which a plurality of symbols is rearranged in a display, the method comprising steps of:
(a) starting a variable display of the symbols based on a predetermined condition,
(b) rearranging the symbols in a timing at which a predetermined time has elapsed after the variable display is started,
(c) determining a winning on the basis of a relation of the symbols rearranged,
(d) switching the predetermined time between a base time and a special time shorter than the base time, based on the operation received by the input device and
(e) outputting a notifying sound corresponding to an operation received by the input device, from the speaker.

7. A playing method of a gaming machine repeatedly executing a unit game in which a plurality of symbols are rearranged in a display, the method comprising steps of:
(a) starting a variable display of the symbols based on a predetermined condition,
(b) rearranging the symbols in a timing at which a predetermined time has elapsed after the variable display is started,
(c) determining a winning on the basis of a relation of the symbols rearranged,
(d) shifting to a specific game state when a relation of the symbols rearranged is a specific relation and
(e) switching the predetermined time between a base time and a special time shorter than the base time, based on the operation received by the input device, in the specific game state.

8. A playing method of a gaming machine repeatedly executing a unit game in which a plurality of symbols is rearranged in a display, the method comprising steps of:
(a) starting a variable display of the symbols based on a predetermined condition,
(b) rearranging the symbols in a timing at which a predetermined time has elapsed after the variable display is started,
(c) determining a winning on the basis of a relation of the symbols rearranged,
(d) shifting to a specific game state when a relation of the symbols rearranged is a specific relation,
(e) switching the predetermined time between a base time and a special time shorter than the base time, based on the operation received by the input device, in the specific game state and
(f) outputting a notifying sound corresponding to an operation received by the input device, from the speaker.
